(19) Europäisches Patentamt
European Patent Office
Office européen des brevets

(11) **EP 4 553 700 A1**

(12) **EUROPEAN PATENT APPLICATION**

(43) Date of publication:
14.05.2025 Bulletin 2025/20

(21) Application number: 24201594.9

(22) Date of filing: 20.09.2024

(51) International Patent Classification (IPC):
*G06N 3/045* (2023.01)     *G06N 3/082* (2023.01)
*G06N 3/0985* (2023.01)

(52) Cooperative Patent Classification (CPC):
G06N 3/045; G06N 3/082; G06N 3/0985

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 09.11.2023  IN 202321076714
19.03.2024  IN 202321076714

(71) Applicant: Tata Consultancy Services Limited
Maharashtra (IN)

(72) Inventors:
• MUKHOPADHYAY, SHALINI
700091 Kolkata, West Bengal (IN)

• DEY, SWARNAVA
700091 Kolkata, West Bengal (IN)
• GHOSE, AVIK
700091 Kolkata, West Bengal (IN)
• MUKHERJEE, ARIJIT
700091 Kolkata, West Bengal (IN)
• PAL, ARPAN
700091 Kolkata, West Bengal (IN)
• SEKHAR, ASHWIN
560069 Kolkata, West Bengal (IN)

(74) Representative: Goddar, Heinz J.
Boehmert & Boehmert
Anwaltspartnerschaft mbB
Pettenkoferstrasse 22
80336 München (DE)

(54) **METHOD AND SYSTEM FOR MULTIPLE TIME SERIES CLASSIFICATION ON TINY EDGE DEVICES USING LIGHTWEIGHT ATTENTION**

(57) This disclosure relates generally to time series signal classification, and, more particularly, to a method and system for multiple time series classification on tiny edge devices using lightweight attention. Transformer based techniques, sequential deep neural network and the like are utilized for performing time series signal classification. Also, time series classification techniques suitable for tiny edge devices are limited. The method discloses a lightweight attention network comprising attention condenser modules for time series classification on tiny edge device. The method defines a search space which is being used for performing a neural architecture search space that helps to optimize the lightweight attention network to obtain a final lightweight attention network model with high accuracy, low resource and fast inference.

FIG. 3

**Description**

CROSS-REFERENCE TO RELATED APPLICATIONS AND PRIORITY

The present application claims priority to Indian application no. 202321076714, filed on November 09, 2023.

TECHNICAL FIELD

The disclosure herein generally relates to time series signal classification, and, more particularly, to a method and system for multiple time series classification on tiny edge devices using lightweight attention.

BACKGROUND

In the recent past, artificially intelligent wearable devices and sensing systems have become a key focus area for a wide range of applications in the domain of automotive, smart manufacturing, healthcare, wellness and lifestyle, and so on. The advantages of performing first-level signal analytics on end devices are manifold, namely, data transfer reduction, user privacy preservation, and inference latency reduction. For sustainable computing, it is critical to use properly optimized machine learning algorithms for these new intelligent wearable systems. For most of these intelligent embedded devices, the primary machine inference task is the classification and prediction of time series signals collected from physiological and inertial sensors.

There are many existing approaches for time series classification and wearable signal analysis. One of the most popular techniques is the convolutional neural network (CNN), which has been utilized to classify various physiological and inertial signals like electrocardiogram (ECG), electroencephalogram (EEG), inertial measurement unit (IMU), etc. This has been improved further by using residual blocks, which have proven useful for deeper networks. However, CNNs are not suited for time series analysis, due to their inability to capture temporal features and long term dependencies. To address this problem, Recurrent Neural Networks (RNNs) and Long Short-Term Memory (LSTM) based networks came to focus, for their capability to capture relationships between current and previous inputs through feedback connections. Following this, the RNNs and LSTMs were replaced by the attention mechanism and transformer architecture. This addressed the drawbacks of the RNNs and LSTM techniques, such as memory issues due to sequential processing of input data and enabled parallel processing of the entire input to map long-term temporal dependencies.

The problem of time series classification on edge devices is not easy. The use of a multitude of signal modalities, and the constraints of a broad spectrum of devices of varying compute and storage capacity complicates the design space. Although there are many existing solutions to address the problem of time series classification, the ones suitable for edge devices are quite limited. As an example, the state-of-the-art transformer architecture has become the de facto standard for classifying and predicting time series signals. Transformers can model long term temporal dependencies much better than convolutional networks, eliminate the context bottleneck of the recurrent architectures, can be trained in parallel, and provide handles to predict the class for each single feature sample. It is very useful if multiple class labels are present in one time series sequence. However, transformers have very high computing and memory requirements. Such networks can however be supported on relatively powerful devices, with faster processors, sufficient memory, and storage capacity. However, the continuously running analytics on these resource-heavy models may lead to high usage of battery power, frequent charging, and reduced battery life. The transformers have been primarily applied in vision and natural language processing (NLP) tasks and their usage in time series applications is comparatively limited. The time series transformer is similar to the base transformer, where the signal is input to the encoder block after the addition of positional information to samples, and the decoder network is not present. One prior work described a two-tower transformer where the towers work on timestep-based attention and channel-wise attention respectively and combined by a weighted concatenation to find multivariate time series features. Another prior work presented a transformer network for the classification of raw optical satellite time series. Other approaches leverage pre-trained transformers where labeled data is limited but produces good results. But due to high computing and memory requirements, deploying on edge devices is technically challenging.

SUMMARY

Embodiments of the present disclosure present technological improvements as solutions to one or more of the above-mentioned technical problems recognized by the inventors in conventional systems. For example, in one embodiment, a method for multiple time series classification on tiny edge devices using lightweight attention is provided. The method includes receiving a lightweight attention network template for time series classification with a set of layers comprising an embedding network layer, a plurality of lightweight attention modules connected with a scaling layer, and an output network. Further, the method includes, generating a final lightweight attention network model for deploying in a tiny edge device for time series classification based on any one of (i) a k-set of lightweight attention modules, or (ii) a set of m-clones of the k-set of lightweight attention modules, by performing a neural architecture search on the lightweight attention network template based on an optimization technique utilizing the search space and a set of constraints of the tiny edge device. The step of generating the final lightweight attention network model using the k-set of lightweight attention modules (NAS) includes, initially, randomly sampling a pre-defined set of lightweight attention modules from the plurality of lightweight attention modules using the configuration of the set of layers to obtain a sampled set of lightweight attention modules. Further the NAS includes optimizing the sampled set of attention modules to obtain a k-set of lightweight attention modules based on a module optimization reward. The module optimization reward for each lightweight attention module amongst the k-set of lightweight attention modules is greater than a pre-defined threshold module reward. Finally, the NAS includes optimizing the lightweight attention network template using the k-set of lightweight attention modules, the configuration of the set of layers, and the labelled input data by maximizing a model optimization reward to obtain the final lightweight attention network model in accordance with the task. The final lightweight attention network model attains a maximum model optimization reward. The labelled input data is one of (i) a univariate time series signal or (ii) a multivariate time series signal.

In another aspect, a system for multiple time series classification on tiny edge devices using lightweight attention is provided. The system comprises memory storing instructions; one or more communication interfaces; and one or more hardware processors coupled to the memory via the one or more communication interfaces, wherein the one or more hardware processors are configured by the instructions to receive a lightweight attention network template for time series classification with a set of layers comprising an embedding network layer, a plurality of lightweight attention modules connected with a scaling layer, and an output network. Further, the system includes, generating a final lightweight attention network model for deploying in a tiny edge device for time series classification based on any one of (i) a k-set of lightweight attention modules, or (ii) a set of m-clones of the k-set of lightweight attention modules, by performing a neural architecture search on the lightweight attention network template based on an optimization technique utilizing the search space and a set of constraints of the tiny edge device. The step of generating the final lightweight attention network model using the k-set of lightweight attention modules includes, initially, randomly sampling a pre-defined set of lightweight attention modules from the plurality of lightweight attention modules using the configuration of the set of layers to obtain a sampled set of lightweight attention modules. Further the NAS includes optimizing the sampled set of attention modules to obtain a k-set of lightweight attention modules based on a module optimization reward. The module optimization reward for each lightweight attention module amongst the k-set of lightweight attention modules is greater than a pre-defined threshold module reward. Finally, the NAS includes optimizing the lightweight attention network template using the k-set of lightweight attention modules, the configuration of the set of layers, and the labelled input data by maximizing a model optimization reward to obtain the final lightweight attention network model in accordance with the task. The final lightweight attention network model attains a maximum model optimization reward. The labelled input data is one of (i) a univariate time series signal or (ii) a multivariate time series signal.

Each lightweight attention module amongst the plurality of lightweight attention modules includes a max pooling layer, a lightweight convolution network, and an unpooling layer. The lightweight attention module is depicted as any one of (i) a sequential branched connection, (ii) a parallel branched connection, or (iii) a combination thereof. The type of the set of layers comprises a convolution layer, the max pooling layer, a dense layer, a lightweight attention module, and a softmax layer. The configuration of the set of layers comprises a kernel size, an embedding dimension, number of filters, a pool size, and a dense size. The connectivity between the set of layers comprises a sequential connectivity, a single branch connectivity, a double branch connectivity and a combined connectivity.

The module optimization reward is a function of a module length, a module accuracy, and number of multiply-accumulate operations in the lightweight attention module. The model optimization reward is a function of size of the model, accuracy of the model, number of layers in the model and number of multiply-accumulate operations in the model. The step of generating the final lightweight attention network model using the set of m-clones of the k-set of lightweight attention modules includes generating a set of m-clones of the k-set of lightweight attention modules to serve as multiple attention heads. Further the system includes optimizing the lightweight attention network template using the set of m-clones of the k-set of lightweight attention modules, the configuration of the set of layers, and the labelled input data, to obtain the final lightweight attention network model in accordance with the task. The final lightweight attention network model is obtained by maximizing the model optimization reward, wherein the final lightweight attention network model attains a maximum model optimization reward. The final lightweight attention network model is deployed in a tiny edge device for real-time series classification using real-time series signal data during an inferencing stage.

In yet another aspect, there is provided a computer program product comprising a non-transitory computer readable medium having a computer readable program embodied therein, wherein the computer readable program, when executed on a computing device causes the computing device for multiple time series classification on tiny edge devices using lightweight attention by receiving a lightweight attention network template for time series classification with a set of layers comprising an embedding network layer, a plurality of lightweight attention modules connected with a scaling layer, and an output network. Further, the computer readable program includes, generating a final lightweight attention network model for deploying in a tiny edge device for time series classification based on any one of (i) a k-set of lightweight attention modules, or (ii) a set of m-clones of the k-set of lightweight attention modules, by performing a neural architecture search on the lightweight attention network template based on an optimization technique utilizing the search space and a set of constraints of the tiny edge device. The step of generating the final lightweight attention network model using the k-set of lightweight attention modules includes, initially, randomly sampling a pre-defined set of lightweight attention modules from the plurality of lightweight attention modules using the configuration of the set of layers to obtain a sampled set of lightweight attention modules. Further the NAS includes optimizing the sampled set of attention modules to obtain a k-set of lightweight attention modules based on a module optimization reward. The module optimization reward for each lightweight attention module amongst the k-set of lightweight attention modules is greater than a pre-defined threshold module reward. Finally, the NAS includes optimizing the lightweight attention network template using the k-set of lightweight attention modules, the configuration of the set of layers, and the labelled input data by maximizing a model optimization reward to obtain the final lightweight attention network model in accordance with the task. The final lightweight attention network model attains a maximum model optimization reward. The labelled input data is one of (i) a univariate time series signal or (ii) a multivariate time series signal.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for multiple time series classification on tiny edge devices using a lightweight attention network according to some embodiments of the present disclosure.
FIG. 2A and FIG.2B is an exemplary flow diagram for a method for multiple time series classification on tiny edge devices using the lightweight attention network in accordance with some embodiments of the present disclosure.
FIG. 3 illustrates an alternative representation of the flow diagram of FIG. 2, in accordance with some embodiments of the present disclosure.
FIG. 4 depicts a generalized architecture overview of the lightweight attention network template for time series classification in accordance with some embodiments of the present disclosure.
FIG. 5 depicts the lightweight attention network for classification using human activity recognition (HAR) dataset in accordance with some embodiments of the present disclosure.
FIG. 6 illustrates output from attention modules from two branches depicted in FIG. 5 **for two activities: 'table tennis' and 'sit' in accordance with some** embodiments of the present disclosure.
FIG. 7 depicts the lightweight attention network for classification using University of California, Riverside (UCR) dataset in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There are many existing approaches for time series classification and wearable signal analysis. One commonly used technique is the convolutional neural network (CNN), which is utilized to classify various physiological and inertial signals. However, CNNs are not suited for time series analysis, since they are not able to capture temporal features and long term dependencies. Further, Recurrent Neural Networks (RNNs) and Long Short-Term Memory (LSTM) based networks were used for their capability to capture relationships between current and previous inputs through feedback connections. Thus, RNNs and LSTMs were replaced by the attention mechanism and transformer architecture. This addressed the drawbacks of these techniques, such as memory issues due to sequential processing of input data, and enabled parallel processing of the entire input to map long-term temporal dependencies in an efficient manner.

A transformer is a deep neural network, based on the concept of attention, which provides context for any position in a sequence. The attention mechanism is a mapping of a query and set of key-value pairs to an output. The transformers are applied in computer vision and natural language processing (NLP) tasks. The time series transformer is similar to the base transformer, where the signal is input to the encoder block after the addition of positional information to samples, and the decoder network is not present.

The computational load of attention mechanism is high and unsuitable for edge platforms. Hence the concept of attention condenser is introduced to preserve the primary feature-handling capability of the attention technique, with much reduced computations. The self-attention module was replaced with one involving reduced input dimensions and learning the relationships between local and cross-channel activations with joint embeddings. One prior work has used this technique and applied it to several speech and image recognition tasks on edge devices. Yet another work proposed the use of double-condensed attention condenser layers for improved performance on natural language processing (NLP) tasks. However, these techniques have not been tried for time series classification.

The attention condensers were designed as a low-footprint substitute of self-attention. Here, the input activations are reduced in dimension to optimize model accuracy and computational efficiency. An attention condenser $A$ is a self-attention mechanism with a condensation layer $C(V)$ followed by an embedding structure $E(Q)$ and an expansion layer $X(K)$. The expansion layer projects the condensed embedding to a higher dimension in $A$ and a selective attention mechanism $F(V,A,S)$, where $V$ input data and $S$ scaling factor, is performed on the resultant attention values. The attention condenser was initially designed for a limited vocabulary speech recognition task. For this, the input speech signal was transformed to a frequency spectrum, and a subset of frequencies were used as inputs to the model. However, while speech signals cover a small range of frequencies, other time series signals have a broader spectrum, resulting in a larger input matrix.

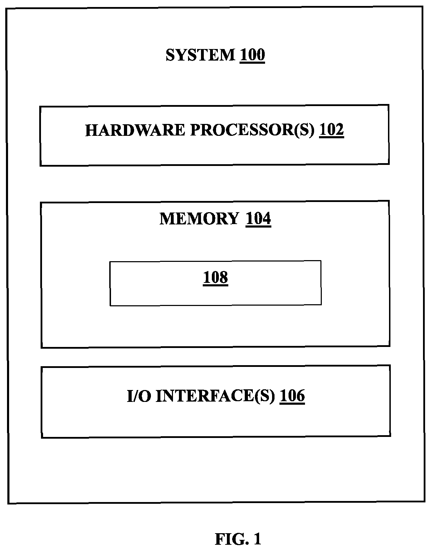

Referring now to the drawings, and more particularly to FIG. 1 through FIG. 7, where similar reference characters denote corresponding features consistently throughout the figures, there are shown preferred embodiments and these embodiments are described in the context of the following exemplary system and/or method. The disclosed method herewith uses the phrases 'lightweight attention' and 'lightweight attention network' interchangeably.

FIG. 1 illustrates an exemplary block diagram of a system 100 for multiple time series classification on tiny edge devices using a lightweight attention network according to some embodiments of the present disclosure. In an embodiment, system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the **expressions 'processors' and 'hardware processors' may be used interchangeably. In** an embodiment, system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 104 includes a plurality of modules 108 (not shown) which includes programs or coded instructions that supplement applications or functions performed by the system 100 for executing different steps involved in the process of time series classification being performed by the system 100. The plurality of modules, amongst other things, can include routines, programs, objects, components, and data structures, which perform particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof. The plurality of modules can include various sub-modules such as lightweight attention module, search space module and the like (not shown).

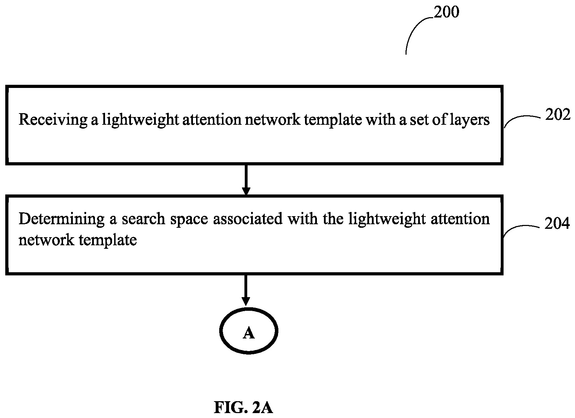

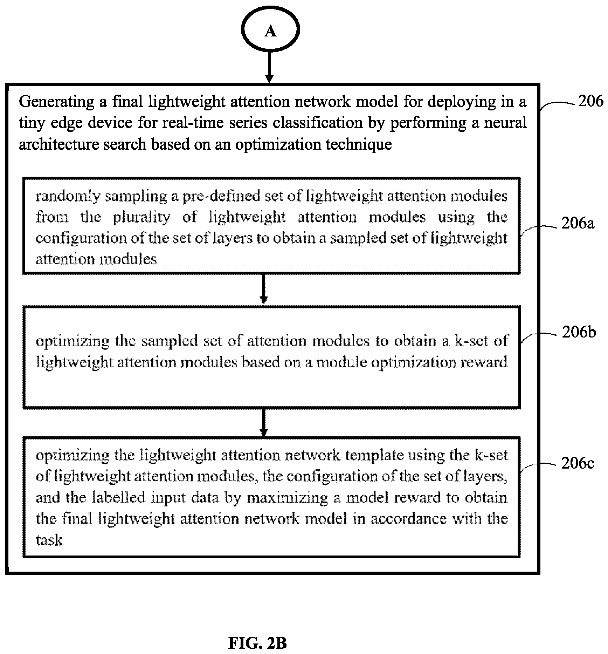

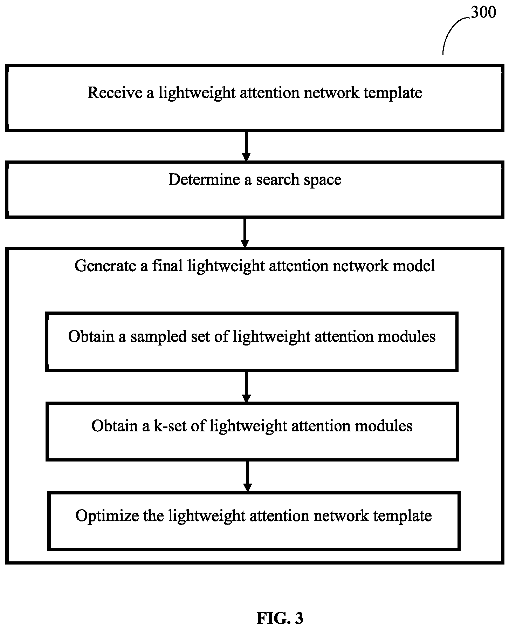

Further, the memory 104 may include a database or repository which includes a lightweight attention network template database. The memory 104 may comprise information pertaining to input(s)/output(s) of each step performed by the processor(s) 102 of the system 100 and methods of the present disclosure. In an embodiment, the database may be external (not shown) to the system 100 and coupled via the I/O interface 106. The database can store a k-set of lightweight attention modules, a set of m-clones of the k-set of lightweight attention modules, and so on. FIG. 2A and FIG.2B, collectively referred as FIG. 2, is an exemplary flow diagram illustrating a method 200 for multiple time series classification on tiny edge devices using the lightweight attention network by the system of FIG. 1, in accordance with some embodiments of the present disclosure and FIG. 3 is an alternate representation of FIG. 2.

In an embodiment, the system 100 comprises one or more data storage devices or the memory 104 operatively coupled to the one or more hardware processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIGS. 2A and 2B. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

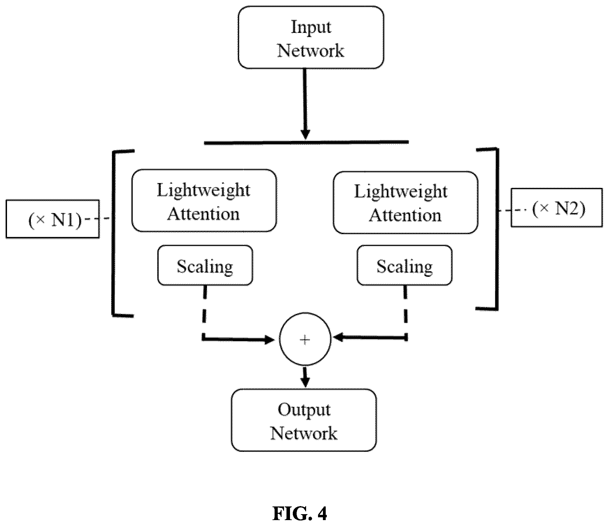

Now referring to FIG. 2, at step 202 of the method 200, the one or more hardware processors are configured to receive a lightweight attention network template with a set of layers. The set of layers includes an embedding network layer, a plurality of lightweight attention modules connected with a scaling layer, and an output network. FIG. 4 depicts a generalized architecture overview of a lightweight attention network template for time series classification in accordance with some embodiments of the present disclosure. The individual lightweight attention modules are depicted in sequential, parallel branched connections or a combination of sequential and parallel connection. The parameter $N_1$ as shown in FIG. 4 has a range $[1, N_{max}]$ while $N_2$ as shown in FIG. 4 has a range $[0, N_{max}]$, denoting that there must be at least 1 branch with an attention module, and the remaining part of the model can be flexible, with varying number of attention modules. The input layer comprises the raw signal from wearable signals, divided into windows and pre-processed by standard techniques such as baseline removal and normalization. This processed signal is input to the embedding Network. Following this, the attention module was implemented with a max pooling layer, a lightweight convolution network, and an unpooling layer to compute the attention values of the input data. Scaling factors were used for each channel, to set the weight of each attention branch. The input and output dimensions of the lightweight attention layer were equal. The purpose of the max pooling layer is to down sample the input signal vector $S_{in}$ to its maximum value points and focusing the feature learning on these timesteps. After extraction of these features, an unpooling operation, with the aid of a pooling mask, ensures the upsampling of the learnt features to their original positions in the input signal $S_{in}$. When the input and attention values are scaled and **added, the final output contains the input signal with 'attention' on the timesteps with** processed features.

Since the time series data changes in terms of feature length, frequency, etc., the lightweight attention network template architecture can also be varied to achieve good results in terms of accuracy and model size. The steps 204 and 206 provides the various aspects investigated and method to generate a final lightweight attention network model considering the time series signal for classification and on the configuration of the tiny edge device.

Further, at step 204 of the method 200, the one or more hardware processors are configured to determine a search space associated with the lightweight attention network template. The search space includes a set of search parameters comprising type of the set of layers, configuration of the set of layers, configuration of the plurality of lightweight attention modules, connectivity between the set of layers. The search space is defined so that it is used for automatically generating the final lightweight attention network on the tiny edge device. The search space is designed in such a way that the generated final lightweight attention network is customized for timeseries classification tasks, with low computational complexity and flexible lightweight attention modules to capture timeseries features efficiently. The set of search parameters considered are types of layers, configuration of layers, configuration of lightweight attention modules, connectivity between layers. The types of layers considered are convolution layer, max pooling layer, a dense layer, a lightweight attention module, a softmax layer and so on. The configuration of layers included are a kernel size, an embedding dimension, number of filters, a pool size, a dense size etc. The search parameter configuration of the plurality of lightweight attention modules includes sub-layers of convolution layers, a separable convolution layer, dense layer etc. Whereas the search parameter connectivity between the set of layers includes a sequential connectivity, a single branch connectivity, a double branch connectivity, a combined connectivity and so on. Table 1 below shows a detailed search space configuration with few examples of the search parameters and its corresponding values.

Table 1

| Search Parameters | Type | Configuration | Parameter Values |
|---|---|---|---|
| Layer configuration | Lightweight_Attention | Layers | {Conv, SeparableConv, MaxPool, Unpool} |
| | | Kernel size | {3, 5, 7, 9, 11, 13, 15} |
| | | Filters | {8, 16, 32, 64, 128, 256} |
| | Conv | Kernel Size | {1, 3, 5, 7, 9, 11, 13, 15} |
| | | Filters | {8, 16, 32, 64, 128, 256} |
| | SeparableConv | Kernel Size | {1, 3, 5, 7, 9, 11, 13, 15} |
| | | Filters | {8, 16, 32, 64, 128, 256} |
| | Dense | Size | {8, 16, 32, 64, 128, 256} |
| Other Configurations | Number of lightweight attention | | {1, 2, 3} |
| | Connectivity | | {Sequential, 1-branch, 2-branch, N-branches, Combined} |
| | Embedding dimension | | {4, 8, 16, 32, 64} |
| | Attention scaling | | Range (0,1] |
| | Input Network | Layers | {Conv, SeparableConv, Dense-Conv, Dense} |
| | Output Network | Layers | {Conv, Dense, None} |

Next, at step 206 of the method 200, the one or more hardware processors are configured to generate a final lightweight attention network model. This final lightweight attention network model is deployed in the tiny edge device for time series classification by performing a neural architecture search (NAS) on the lightweight attention network template. This is based on one of (i) a k-set of lightweight attention modules, or (ii) a set of m-clones of the k-set of lightweight attention modules. The NAS is performed using an optimization technique such as evolutionary algorithm, reinforcement learning algorithm, differential search algorithm which uses regression and the like. The optimization technique utilizes the search space and a set of constraints of the tiny edge device. The NAS to obtain the final lightweight attention network model based on the k-set of lightweight attention modules is explained further from steps 206a to 206c. At step 206a, a pre-defined set ($\boldsymbol{B}$) (for example B=1000) of lightweight attention modules is randomly sampled from the plurality of lightweight attention modules using the configuration of the set of layers to obtain a sampled set of lightweight attention modules. The pre-defined set ($\boldsymbol{B}$) depends on complexity of training dataset for the lightweight attention network template or complexity of the task or problem solved. The sampling is done using values from the configuration of the set of layers such as layers, kernel size, filters and so on for the lightweight attention modules. Further at step 206b, the sampled set of attention modules are optimized to obtain a k-set of lightweight attention modules based on a module optimization reward. The optimization is performed based on the module optimization reward, $\boldsymbol{R_b}$, which is a function of block length, $\boldsymbol{L_b}$, block accuracy, $\boldsymbol{A_b}$ , and the number of multiply-accumulate operations in the lightweight attention module, $\boldsymbol{O_b}$. However, the module optimization reward is not limited to the above-mentioned parameters, it can be a function of power, energy, latency of the lightweight attention modules. The module optimization reward for each lightweight attention module amongst the k-set of lightweight attention modules is greater than a pre-defined threshold module reward. i.e., for top k blocks (for e.g., k=3, where $\boldsymbol{R_b} > \boldsymbol{R_{b\_th}}$, module reward value is greater than a preset threshold value. The module optimization reward is represented as,

$$R_b = f_1(A_b, L_b, O_b) = a_b \times A_b + l_{b1} \times e^{(l_{b2} \times L_b)} + o_{b1} \times e^{(o_{b2} \times O_b)}$$

where $\boldsymbol{a_b}$, $\boldsymbol{l_{b1}}$, $\boldsymbol{l_{b2}}$, $\boldsymbol{o_{b1}}$ and $\boldsymbol{o_{b2}}$ are scaling coefficients for each parameter.

Next at step 206c, the lightweight attention network template is optimized using the k-set of lightweight attention modules, the configuration of the set of layers, and a labelled input data. The labelled input data can be any one of (i) a univariate time series signal such as any dataset from University of California, Riverside (UCR) time series archive which is publicly available and contains almost 140 univariate time series datasets or (ii) a multivariate time series signal such as KU-Human activity recognition (HAR) dataset which is an open dataset. The optimization is performed by maximizing a model optimization reward to obtain the final lightweight attention network model in accordance with the task. The final lightweight attention network model attains a maximum model reward. The model with maximum reward, is obtained from a randomly sampled set of E/2 models, called as the explored model architecture set M = {$M_1$ , $M_2$ , ..., $M_{E/2}$}, and an optimal set of predicted model architecture $$M = \{M_{\frac{E}{2}+1}, \ldots, M_E\}$$ generated after the exploration set. Here the maximum episodes = E. The best model with maximum can be found before reaching E episodes, and thus can be stopped early based on whether a criterion is satisfied in the early stop episode E' < E, if $R(M_{E'}) >= R_{m\_t}$. The optimized model architecture, i.e., the final lightweight attention network model is represented as $M_o = M[i]$, $i = Argmax(R_m)$. The model optimization reward is a function of objective parameters such as size of the model, accuracy of the model, number of layers in the model and number of multiply-accumulate operations in the model. Here size, number of multiply-accumulate operations are related to constraints of the tiny edge device. The model optimization reward is represented as,

$$R_m = f_2(A_m, S_m, L_m, O_m)$$
$$\Rightarrow R_m = a_m \times A_m + s_{m1} \times e^{(s_{m2} \times S_m)} + l_m \times L_m^{-1} + o_{m1} \times e^{(o_{m2} \times O_m)}$$

where $a_m$, $s_{m1}$, $s_{m2}$, $l_m$, $o_{m1}$, $o_{m2}$ are scaling coefficients for each objective parameter. The optimization of the model can also be performed by first generating a set of m-clones of the k-set of lightweight attention modules to serve as multiple attention heads. Here, the set of m-clones of the k-set of lightweight attention module are similar in structure, however, each clone has different feature set during training and has different weights assigned. Further the lightweight attention network template is optimized using the set of m-clones of the k-set of lightweight attention modules, the configuration of the set of layers, and the labelled input data, to obtain the final lightweight attention network model by maximizing the model optimization reward. The final lightweight attention network model is produced as output for deployment on the tiny edge device. The final lightweight attention network model is deployed in a tiny edge device for real-time series classification using real-time series signal data during an inferencing stage.

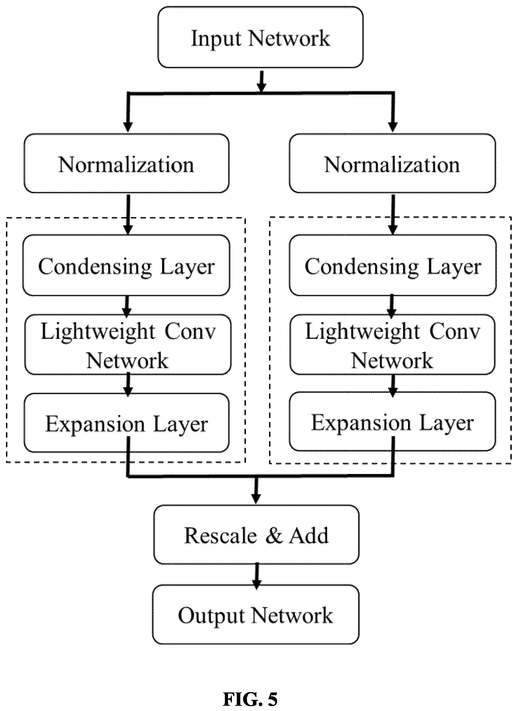

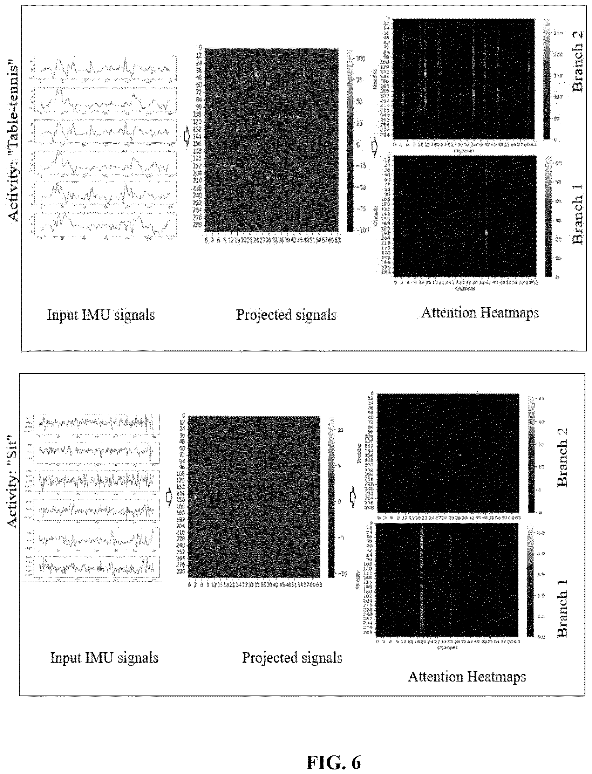

Now considering the human activity recognition (HAR) task, two parallel attention branches were computed $A_1$ and $A_2$. The final output was computed as Combined Attention $A_c = s_1 \times A_1 + s_2 \times A_2$, where $s_1$ and $s_2$ are scaling factors determining the weights of the attention values. $s_1$ is set to 0.4 and $s_2$ was set to 0.6. FIG. 5 depicts the lightweight attention network for classification using HAR dataset in accordance with some embodiments of the present disclosure. The HAR model in FIG. 5 was trained with the maximum number of epochs set to 200, initial learning rate 0.01, with a learning rate decay of 0.2. batch size was set as 256, and early exit was used to prevent overfitting. FIG. 6 illustrates output from attention modules from two branches depicted in FIG. 5 **for two activities: 'table tennis' and 'sit' in** accordance with some embodiments of the present disclosure. The input signals and outputs of the intermediate projection layers and the attention branches for two activities- **'Table tennis' and 'Sitting' are depicted in FIG. 5.**

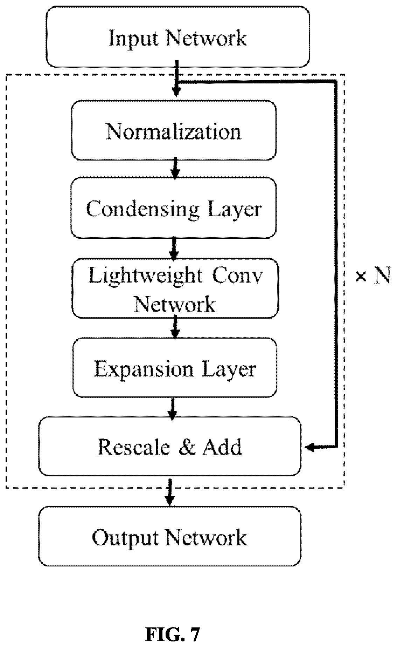

In case of the UCR datasets, a scaling factor of 1 was used and the attention layer was added to the original input channels, and a Scaled Combined Attention $A_c = s_3 \times A_1 + S_{in}$ was computed, where $s_3$ is the scaling factor, $A_1$ is the output of the attention branch, and $S_{in}$ is the original signal input to the lightweight attention module. FIG. 7 depicts the lightweight attention network for classification using UCR dataset in accordance with some embodiments of the present disclosure. The attention modules were connected in sequence, with the value of **N = 3.** This value can change, depending on the problem being addressed. The UCR model as in FIG. 7, the total number of epochs were set to 200, and batch size was set as 32. The input layers and output layers were fine-tuned according to the requirements of different datasets in the UCR archive.

Since the time series data changes in terms of feature length, frequency, etc., the architecture can be varied in terms of number of attention modules, convolution layers and dense layers to achieve good results in terms of accuracy vs model size. Each module in the model reduces the dimension of input by a factor of 0.5. The number of modules that the lightweight attention model contains is designed to be proportional to the length of the feature vector. Usage of large number of modules for smaller feature vector results in an inadequate representation of the input signal in the embeddings. The number of Conv1D layers used within each module can also be modified to tune it to the frequency of the data. Depending on the number of classes, alterations in the dense layer of the output network along with dropout layers resulted in superior accuracy for selected complex datasets out of the archive. For e.g., addition of two dense layers along with dropout layers with a dropout rate of 0.5 resulted in an improvement of accuracy from 56% to 72% for the Adiac dataset in UCR archive.

**EXPERIMENTAL RESULTS:** The final lightweight attention network is evaluated on the KU-HAR dataset. The KU-HAR dataset is published and selected due to its multiple examples from 18 activity classes. This data is collected from 90 subjects and contains 20,750 examples, with 3 seconds of activity and a label in each example. The measurements used smartphone IMU sensors for each participant. The 18 activities include indoor and outdoor activities, such as sitting, standing, moving on a staircase, and table tennis among others. The performance of the disclosed network on the KU-HAR dataset is compared with a Time Series Transformer-based model and a sequential DNN-based model evaluated on the same dataset, but with reduced model size and number of parameters to visualize the detected output in real-time. Table 2 shows the comparison of aforementioned techniques with the disclosed method on the HAR dataset.

Table 2

| Model | Technique | Accuracy | Size |
|---|---|---|---|
| SOA1 | Transformer | 99.2% | 5.8 MB |
| SOA2 | Sequential DNN | 96.67% | 2.6 MB |
| Disclosed method | Lightweight Attention | 96.8% | 518.6 kB |

The final lightweight attention network model is also evaluated on UCR dataset. The UCR archive (2019) has 128 univariate time series datasets for classification and it has become the de-facto standard for evaluating time series classification techniques. These datasets comprise real-world, as well as simulated data from different sources, as well as levels of complexity. The data sources are physiological sensing data like electrocardiogram (ECG) and electroencephalogram (EEG), other sources like spectrographs, image outlines, inertial measurement unit (IMU) sensor data, audio samples among others. In addition to this, the archive has 9 synthetic datasets for evaluating the classification techniques and all the datasets have varying sample lengths. The performance of the disclosed model datasets from UCR archive is shown in Table 3. The performance is compared with state-of-the-art model based on ResNet architecture.

Table 3

| Dataset | ResNet | Disclosed model | N_classes |
|---|---|---|---|
| Adiac | 86.75 | 72.0 | 37 |
| Chlorine | 74.19 | 66.9 | 3 |
| Mote | 91.87 | 83.86 | 2 |
| Wafer | 100 | 100 | 2 |
| Ford A | 96.81 | 100 | 2 |
| Ford B | 92.93 | 100 | 2 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiment of the present disclosure herein addresses the problem of time series classification on the tiny edge device. The method discloses a novel lightweight attention network comprising attention condenser modules for time series classification. The method also automatically generates new architectures for time series classification on the tiny edge devices. The method uses a neural architecture search algorithm which requires a defined search space from which the network architecture is sampled and an optimization algorithm that helps to choose the best combination from available options in the search space to output optimal model with high accuracy, low resource and fast inference.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. **The term "computer-readable medium" should** be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200) comprising:

    receiving, via one or more hardware processors, a lightweight attention network template for time series classification, the lightweight attention network template comprising a set of layers, and wherein the set of layers comprising an embedding network layer, a plurality of lightweight attention modules connected with a scaling layer, and an output network (202);
    determining, via the one or more hardware processors, a search space associated with the lightweight attention network template, wherein the search space includes a set of search parameters comprising type of the set of layers, configuration of the set of layers, configuration of the plurality of lightweight attention modules, connectivity between the set of layers (204);
    generating, via the one or more hardware processors, a final lightweight attention network model for deploying in a tiny edge device for the time series classification based on one of (i) a k-set of lightweight attention modules, or (ii) a set of m-clones of the k-set of lightweight attention modules, by performing a neural architecture search on the lightweight attention network template based on an optimization technique utilizing the search space and a set of constraints of the tiny edge device, wherein the step of generating the final lightweight attention network model using the k-set of lightweight attention modules comprises (206):

        randomly sampling a pre-defined set of lightweight attention modules from the plurality of lightweight attention modules using the configuration of the set of layers to obtain a sampled set of lightweight attention modules (206a);
        optimizing the sampled set of attention modules to obtain a k-set of lightweight attention modules based on a module optimization reward, wherein the module optimization reward for each lightweight attention module amongst the k-set of lightweight attention modules is greater than a pre-defined threshold module reward (206b); and
        optimizing the lightweight attention network template using the k-set of lightweight attention modules, the configuration of the set of layers, and a labelled input data by maximizing a model optimization reward to obtain the final lightweight attention network model in accordance with the task, wherein the final lightweight attention network model attains a maximum model optimization reward, and wherein the labelled input data is one of (i) a univariate time series signal or (ii) a multivariate time series signal (206c).

2. The method of claim 1, wherein each lightweight attention module amongst the plurality of lightweight attention modules,

(a) comprises a max pooling layer, a lightweight convolution network, and an unpooling layer;
(b) is depicted as any one of (i) a sequential branched connection, (ii) a parallel branched connection, or (iii) a combination thereof.

3. The method of claim 1, wherein,

the type of the set of layers comprises a convolution layer, the max pooling layer, a dense layer, a lightweight attention module, and a softmax layer,
the configuration of the set of layers comprises a kernel size, an embedding dimension, number of filters, a pool size, and a dense size,
the configuration of the plurality lightweight attention modules comprises a set of sub-layers such as the convolution layer, a separable convolution layer, and the dense layer, and
the connectivity between the set of layers comprises a sequential connectivity, a single branch connectivity, a double branch connectivity and a combined connectivity.

4. The method of claim 1, wherein the module optimization reward is a function of a module length, a module accuracy, and number of multiply-accumulate operations in the lightweight attention module.

5. The method of claim 1, wherein the model optimization reward is a function of size of the model, accuracy of the model, number of layers in the model and number of multiply-accumulate operations in the model.

6. The method of claim 1, wherein the step of generating the final lightweight attention network model using the set of m-clones of the k-set of lightweight attention modules comprises:

generating a set of m-clones of the k-set of lightweight attention modules to serve as multiple attention heads; and
optimizing the lightweight attention network template using the set of m-clones of the k-set of lightweight attention modules, the configuration of the set of layers, and the labelled input data, to obtain the final lightweight attention network model in accordance with the task by maximizing the model optimization reward, wherein the final lightweight attention network model attains a maximum model optimization reward.

7. The method of claim 1, wherein the final lightweight attention network model is deployed in a tiny edge device for real-time series classification using real-time series signal data during an inferencing stage.

8. A system (100), comprising:

a memory (104) storing instructions;
one or more communication interfaces (106); and
one or more hardware processors (102) coupled to the memory (104) via the one or more communication interfaces (106), wherein the one or more hardware processors (102) are configured by the instructions to:

receive a lightweight attention network template for time series classification, the lightweight attention network template comprising a set of layers, and wherein the set of layers comprising an embedding network layer, a plurality of lightweight attention modules connected with a scaling layer, and an output network;
determine a search space associated with the lightweight attention network template, wherein the search space includes a set of search parameters comprising type of the set of layers, configuration of the set of layers, configuration of the plurality of lightweight attention modules, connectivity between the set of layers;
generate a final lightweight attention network model for deploying in a tiny edge device for time series classification based on one of (i) a k-set of lightweight attention modules, or (ii) a set of m-clones of the k-set of lightweight attention modules, by performing a neural architecture search on the lightweight attention network template based on an optimization technique utilizing the search space and a set of constraints of the tiny edge device, wherein the step of generating the final lightweight attention network model using the k-set of lightweight attention modules comprises:

randomly sampling a pre-defined set of lightweight attention modules from the plurality of lightweight attention modules using the configuration of the set of layers to obtain a sampled set of lightweight attention modules;

optimizing the sampled set of attention modules to obtain a k-set of lightweight attention modules based on a module optimization reward, wherein the module optimization reward for each lightweight attention module amongst the k-set of lightweight attention modules is greater than a pre-defined threshold module reward; and

optimizing the lightweight attention network template using the k-set of lightweight attention modules, the configuration of the set of layers, and a labelled input data by maximizing a model optimization reward to obtain the final lightweight attention network model in accordance with the task, wherein the final lightweight attention network model attains a maximum model optimization reward, and wherein the labelled input data is one of (i) a univariate time series signal or (ii) a multivariate time series signal.

9. The system of claim 8, wherein each lightweight attention module amongst the plurality of lightweight attention modules,

(c) comprises a max pooling layer, a lightweight convolution network, and an unpooling layer;
(d) is depicted as any one of (i) a sequential branched connection, (ii) a parallel branched connection, or (iii) a combination thereof.

10. The system of claim 8, wherein,

the type of the set of layers comprises a convolution layer, the max pooling layer, a dense layer, a lightweight attention module, and a softmax layer,

the configuration of the set of layers comprises a kernel size, an embedding dimension, number of filters, a pool size, and a dense size,

the configuration of the plurality lightweight attention modules comprises a set of sub-layers such as the convolution layer, a separable convolution layer, and the dense layer, and

the connectivity between the set of layers comprises a sequential connectivity, a single branch connectivity, a double branch connectivity and a combined connectivity.

11. The system of claim 8, wherein the module optimization reward is a function of a module length, a module accuracy, and number of multiply-accumulate operations in the lightweight attention module.

12. The system of claim 8, wherein the model optimization reward is a function of size of the model, accuracy of the model, number of layers in the model and number of multiply-accumulate operations in the model.

13. The system of claim 8, wherein the step of generating the final lightweight attention network model using the set of m-clones of the k-set of lightweight attention modules comprises:

generate a set of m-clones of the k-set of lightweight attention modules to serve as multiple attention heads; and

optimize the lightweight attention network template using the set of m-clones of the k-set of lightweight attention modules, the configuration of the set of layers, and the labelled input data, to obtain the final lightweight attention network model in accordance with the task by maximizing the model optimization reward, wherein the final lightweight attention network model attains a maximum model optimization reward.

14. The system of claim 8, wherein the final lightweight attention network model is deployed in a tiny edge device for real-time series classification using real-time series signal data during an inferencing stage.

15. One or more non-transitory machine-readable information storage mediums comprising one or more instructions which when executed by one or more hardware processors cause:

receiving a lightweight attention network template for time series classification, the lightweight attention network template further comprising a set of layers, and wherein the set of layers comprising an embedding network layer, a plurality of lightweight attention modules connected with a scaling layer, and an output network;

determining a search space associated with the lightweight attention network template, wherein the search space includes a set of search parameters further comprising type of the set of layers, configuration of the set of layers, configuration of the plurality of lightweight attention modules, connectivity between the set of layers;

generating a final lightweight attention network model for deploying in a tiny edge device for the time series classification based on one of (i) a k-set of lightweight attention modules, or (ii) a set of m-clones of the k-set of lightweight attention modules, by performing a neural architecture search on the lightweight attention network template based on an optimization technique utilizing the search space and a set of constraints of the tiny edge device, wherein the step of generating the final lightweight attention network model using the k-set of lightweight attention modules comprises:

randomly sampling a pre-defined set of lightweight attention modules from the plurality of lightweight attention modules using the configuration of the set of layers to obtain a sampled set of lightweight attention modules;

optimizing the sampled set of attention modules to obtain a k-set of lightweight attention modules based on a module optimization reward, wherein the module optimization reward for each lightweight attention module amongst the k-set of lightweight attention modules is greater than a pre-defined threshold module reward; and

optimizing the lightweight attention network template using the k-set of lightweight attention modules, the configuration of the set of layers, and a labelled input data by maximizing a model optimization reward to obtain the final lightweight attention network model in accordance with the task, wherein the final lightweight attention network model attains a maximum model optimization reward, and wherein the labelled input data is one of (i) a univariate time series signal or (ii) a multivariate time series signal.

SYSTEM 100

HARDWARE PROCESSOR(S) 102

MEMORY 104

108

I/O INTERFACE(S) 106

FIG. 1

200

Receiving a lightweight attention network template with a set of layers — 202

Determining a search space associated with the lightweight attention network template — 204

A

**FIG. 2A**

A

Generating a final lightweight attention network model for deploying in a tiny edge device for real-time series classification by performing a neural architecture search based on an optimization technique — 206

randomly sampling a pre-defined set of lightweight attention modules from the plurality of lightweight attention modules using the configuration of the set of layers to obtain a sampled set of lightweight attention modules — 206a

optimizing the sampled set of attention modules to obtain a k-set of lightweight attention modules based on a module optimization reward — 206b

optimizing the lightweight attention network template using the k-set of lightweight attention modules, the configuration of the set of layers, and the labelled input data by maximizing a model reward to obtain the final lightweight attention network model in accordance with the task — 206c

**FIG. 2B**

300

Receive a lightweight attention network template

Determine a search space

Generate a final lightweight attention network model

Obtain a sampled set of lightweight attention modules

Obtain a k-set of lightweight attention modules

Optimize the lightweight attention network template

**FIG. 3**

**FIG. 4**

**FIG. 5**

FIG. 6

**FIG. 7**

Europäisches
Patentamt

European
Patent Office

Office européen
des brevets

# EUROPEAN SEARCH REPORT

Application Number

EP 24 20 1594

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEXANDER WONG ET AL: "TinySpeech: Attention Condensers for Deep Speech Recognition Neural Networks on Edge Devices", ARXIV.ORG, CORNELL UNIVERSITY LIBRARY, 201 OLIN LIBRARY CORNELL UNIVERSITY ITHACA, NY 14853, 12 October 2020 (2020-10-12), XP081784727, * the whole document * | 1-15 | INV. G06N3/045 G06N3/082 G06N3/0985 |
| A | ALEXANDER WONG ET AL: "Faster Attention Is What You Need: A Fast Self-Attention Neural Network Backbone Architecture for the Edge via Double-Condensing Attention Condensers", ARXIV.ORG, CORNELL UNIVERSITY LIBRARY, 201 OLIN LIBRARY CORNELL UNIVERSITY ITHACA, NY 14853, 3 February 2023 (2023-02-03), XP091433302, * the whole document * | 1-15 | |

TECHNICAL FIELDS
SEARCHED      (IPC)

G06N

The present search report has been drawn up for all claims

| Place of search | Date of completion of the search | Examiner |
|---|---|---|
| The Hague | 21 February 2025 | Szymanski, Francois |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321076714